# DEMANDE DE BREVET EUROPEEN

(11) **EP 1 447 948 A2**
(43) Date de publication de la demande: **18.08.2004**
(21) Numéro de dépôt: 04290361.7
(22) Date de dépôt: 04.02.2004
(51) Int. Cl.: H04L 12/56

(54) **Requête à traitement anticipé pour un routeur actif**

(30) Priorité: 11.02.2003 FR 0301587
(71) Demandeur: ALCATEL, 75008 Paris (FR)
(72) Inventeur: Marce, Olivier, 91300 Massy (FR); Clevy, Laurent, 28000 Chartres (FR); Le Moigne, Olivier, Ottawa, ON, K2B 5K8 (CA)
(74) Mandataire: Sciaux, Edmond

(57) **Abrégé**

Le procédé de fonctionnement d'un noeud actif (1) d'un réseau de communication par paquets, notamment d'un routeur IP actif, comprend les étapes successives de :
a) réception d'un paquet actif envoyé par un terminal (2) ;
b) exécution d'une requête contenue dans le paquet actif, cette requête étant destinée à configurer des fonctions de traitement de paquets ;
c) puis exécution d'un programme contenu ou identifié dans le paquet actif, ce programme étant destiné à commander des fonctions de traitement de paquets.

Le paquet actif peut en outre être envoyé par le routeur à un terminal destinataire (3). L'invention propose aussi un noeud actif, notamment un routeur IP, mettant en oeuvre le procédé.

L'invention propose encore un paquet de données, comprenant une requête et un programme ou une identification d'un programme, la requête et le programme étant destinés à être exécutés par un noeud actif.

## Description

L'invention concerne le traitement de paquets de données transmis sur un réseau de communication, et plus particulièrement le traitement de paquets dans un routeur actif.

Il est connu de transmettre des paquets d'un émetteur vers un destinataire dans un réseau de communication par paquets en transitant par des noeuds intermédiaires. Dans le cas particulier d'un réseau au protocole IP (de l'anglais « Internet Protocol »), on désigne généralement ces noeuds par routeurs.

Par commodité, nous nous référerons uniquement au terme routeur bien que la description s'applique plus généralement aux noeuds des réseaux de communication par paquets.

Un tel réseau peut comprendre des routeurs du type actif. Un routeur actif présente l'aptitude d'être programmé pour réaliser des traitements spécifiques sur les paquets de données le traversant ou pour changer dynamiquement son comportement.

Pour programmer un routeur actif, un paquet lui est adressé qui contient une adresse du réseau à laquelle le programme ou le code à exécuter par le routeur est disponible. Le routeur télécharge alors le programme depuis cette adresse dans sa mémoire et l'exécute. En variante, le programme peut être compris dans le paquet qui lui a été adressé auquel cas le routeur charge le programme dans sa mémoire en le lisant dans ce paquet.

Un tel paquet servant à fournir au routeur l'adresse de mise à disposition du programme ou le programme lui-même, est appelé « paquet actif » dans la suite de la description.

Un paquet actif peut en outre comporter des données qui sont destinées à un appareil quelconque du réseau autre que le routeur actif auquel cas le paquet contient classiquement l'adresse de l'appareil destinataire.

Le programme chargé par le routeur actif est généralement spécifique à un flux de paquets qui traversent le routeur actif après programmation du routeur avec ce programme. Dans la suite, on désigne ce flux de paquets par flux à traiter. Ainsi, le routeur actif permet de réaliser des traitements spécifiques sur les paquets du flux à traiter grâce au programme qu'il exécute. Le traitement effectué par le routeur peut par exemple consister à transcoder un flux de paquets de données vidéo sur IP d'un format vers un autre par une même instance de programme. Le routeur actif est capable de reconnaître les paquets appartenant au flux actif grâce à un filtre qui est compris dans le programme. Le document **FR 2.827.726** décrit un tel noeud actif.

Néanmoins, ces systèmes de l'art antérieur présentent des inconvénients. En particulier, il peut arriver que le routeur n'ait pas encore chargé et lancé l'exécution du programme contenu ou identifié dans le paquet actif lorsque des paquets du flux à traiter arrivent au routeur. Par conséquent, ces paquets sont envoyés vers leur destinataire sans que le traitement prévu ne leur ait été appliqué par le routeur.

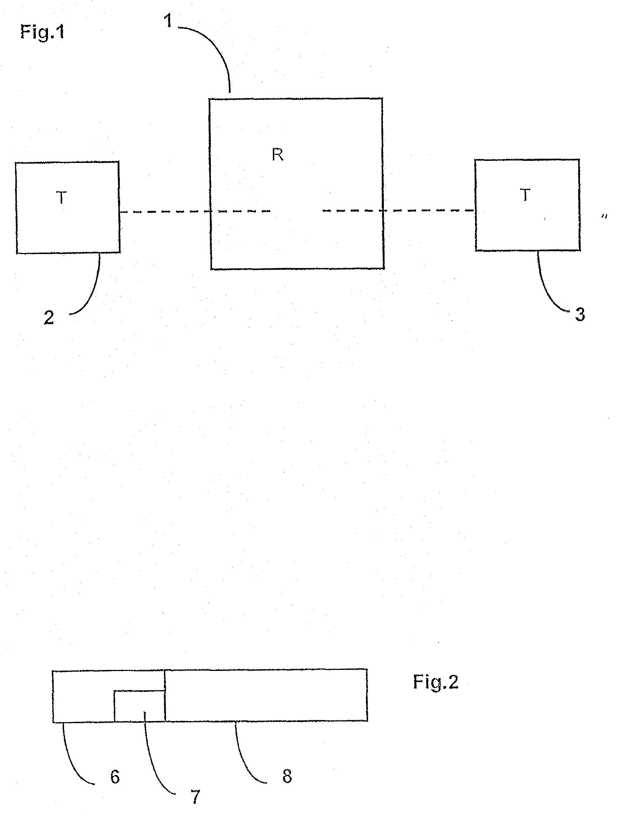

Nous allons illustré un exemple typique d'une situation dans laquelle cet inconvénient peut surgir en relation avec la **figure 1**. Un premier terminal 2 envoie un paquet actif via réseau vers un deuxième terminal 3. Ce paquet actif contient un message destiné au terminal 3 pour lui demander d'envoyer au terminal 2 par exemple un flux de vidéo sur IP. Par ailleurs, ce paquet actif contient une identification d'un programme disponible sur le réseau et servant à traiter les paquets du flux vidéo que va envoyer le terminal 3 au terminal 2, ce programme devant être téléchargé et exécuté par un routeur 1 intermédiaire entre les terminaux 2 et 3.

Lorsqu'il reçoit le paquet actif, le routeur 1 lit l'adresse réseau où se trouve le programme à télécharger. Ensuite, il envoie le paquet au terminal 3 car le routeur 1 n'a pas de traitement à réaliser sur le paquet actif. Par ailleurs, le routeur 1 commence le téléchargement dudit programme à partir de son adresse réseau. En réponse au paquet actif, le terminal 3 envoie le flux de vidéo demandé vers le terminal 2, ce flux traversant le routeur 1.

Il peut arriver que les premiers paquets du flux vidéo soient reçus par le routeur 1 sans que celui-ci ait lancé le programme. Il se peut même que le routeur 1 soit encore en train de télécharger le programme lorsqu'il reçoit les premiers paquets du flux vidéo. Dans ces conditions, le routeur 1 transmet simplement ces paquets vers le terminal 2 sans effectué le traitement prévu sur ces paquets. Dans le pire des cas, le flux à traiter peut avoir traversé dans son intégralité le routeur 1 avant que le routeur ait lancé le programme auquel cas l'intégralité du flux à traiter échappe à tout traitement.

Dans un autre exemple, le terminal 2 envoie un paquet actif via réseau vers le terminal 3. Ce paquet actif contient par exemple une information pour indiquer au terminal 3 qu'il va lui envoyer par exemple un flux de vidéo sur IP. Par ailleurs, ce paquet actif contient une identification d'un programme disponible sur le réseau et servant à traiter les paquets du flux vidéo que va envoyer le terminal 2 au terminal 3, ce programme devant être téléchargé et exécuté par un routeur 1 intermédiaire entre les terminaux 2 et 3.

Lorsqu'il reçoit le paquet actif, le routeur 1 lit l'adresse réseau où se trouve le programme à télécharger. Ensuite, il envoie le paquet au terminal 3 car le routeur 1 n'a pas de traitement à réaliser sur le paquet actif. Par ailleurs, le routeur 1 commence le téléchargement dudit programme à partir de son adresse réseau. En réponse au paquet actif, le terminal 3 envoie un message via réseau au terminal 2 pour l'informer qu'il est prêt à recevoir le flux de vidéo. A réception de ce message, le terminal 2 envoie vers le terminal 3 le flux de vidéo. Là-encore, il peut arriver que les premiers paquets du flux vidéo soient reçus par le routeur 1 sans que celui-ci ait lancé le programme ou qu'il soit encore en train de télécharger le programme. Là-encore, le routeur 1 transmet simplement tout ou partie des paquets vers le terminal 3 sans effectuer le traitement prévu.

Une solution consiste à configurer le routeur pour toujours bloquer le paquet actif qu'il reçoit tant que le programme n'est pas chargé et lancé. Mais cette solution a pour inconvénient de ralentir les échanges entre les terminaux du réseau et peut même être inacceptable dans certaines applications. C'est particulièrement le cas pour une application de type temps réel qui nécessite que les paquets soient acheminés avec le minimum de délai, ou bien avec un délai constant. Si le ou les premiers paquets sont bloqués pendant le chargement du programme, l'acheminement des paquets ne sera pas homogène en délai.

L'invention a pour but de pallier au moins en partie les inconvénients de l'art antérieur en proposant une technologie alliant fiabilité et souplesse.

Ainsi, l'invention propose un procédé de fonctionnement d'un noeud actif apte à traiter des paquets de données en exécutant un programme contenu ou identifié dans un paquet actif, ce programme étant destiné à commander des fonctions de traitement de paquets de données ; caractérisé en ce qu'il comprend les étapes de :
a) réception d'un paquet actif ;
b) exécution d'une requête contenue dans le paquet actif, et destinée à configurer des fonctions de traitement de paquets ;
c) exécution d'un programme contenu ou identifié dans le paquet actif, et destiné à commander des fonctions de traitement paquets de données ; ce programme étant exécuté après l'exécution de cette requête.

Selon un mode de réalisation préféré, l'étape b) comprend la mise en place d'un filtre de paquets. Dans ce mode de réalisation, l'étape b) peut être avantageusement suivie d'une étape de réception et stockage de paquets correspondant au filtre au moins aussi longtemps que l'étape c) n'est pas réalisée.

Dans un autre mode de réalisation préféré, ledit paquet actif est à envoyer à une adresse réseau et le procédé comprend après l'étape b), une étape d' envoi du paquet actif vers ladite adresse.

Selon encore un autre mode de réalisation préféré, ledit paquet actif est à envoyer vers une adresse réseau et le procédé comprend une étape d'envoi du paquet actif vers ladite adresse soit après l'étape b), soit après l'étape c), en fonction de la requête contenue dans le paquet actif.

Selon encore un autre mode de réalisation préféré, l'étape b) comprend une opération de dimensionnement d'une queue de stockage des paquets.

Selon encore un autre mode de réalisation préféré, l'étape b) comprend une opération de lecture dans le paquet actif de paramètres de lancement du programme.

Selon un mode de réalisation particulièrement avantageux, l'étape c) comprend une opération de téléchargement d'un programme identifié dans le paquet actif.

Selon un autre aspect, l'invention propose un noeud actif, notamment un routeur IP, apte à traiter des paquets de données en exécutant un programme contenu ou identifié dans un paquet actif, ce programme étant destiné à commander des fonctions de traitement de paquets de données ; caractérisé en ce qu'il comprend des moyens pour :
a) la réception d'un paquet actif ;
b) l'exécution d'une requête contenue dans le paquet actif, et destinée à configurer des fonctions de traitement de paquets ;
c) et l'exécution d'un programme contenu ou identifié dans le paquet actif, et destiné à commander des fonctions de traitement paquets de données, ce programme étant exécuté après l'exécution de cette requête.

Selon encore un autre aspect, l'invention propose un paquet de données, caractérisé en ce qu'il comprend :
- une requête destinée à être exécutée dans un noeud actif pour configurer des fonctions de traitement de paquets, avant l'exécution d'un programme commandant des fonctions de traitement paquets ;
- et un programme ou une identification d'un programme, ce programme étant destiné à être exécutée dans un noeud actif pour commander des fonctions de traitement paquets, après l'exécution de la requête.

Selon un mode de réalisation préféré, le paquet de données est de type IP et le programme ou ladite identification de programme, ainsi que ladite requête sont placés dans les options du paquet IP.

Dans le cadre de l'invention, la requête contenue dans le paquet provoque un traitement de paquets, par le routeur actif, ce traitement pouvant être de tout type autre qu'une opération de routage classique.

L'invention est maintenant décrite plus en détails dans la description qui suit, et en référence aux dessins, dans lesquels :
- la **figure 1** représente schématiquement deux terminaux et un routeur actif d'un réseau IP sur lequel le procédé est mis en oeuvre;
- la **figure 2** représente un exemple de structure de paquet IP.

L'invention concerne un paquet actif identifiant ou contenant un programme à charger en mémoire d'un routeur actif et à exécuter par ce dernier. De préférence, le paquet contient une identification du programme à télécharger via le réseau car souvent le programme est trop long pour pouvoir être contenu dans le paquet actif lui-même. Selon l'invention, le paquet actif contient en outre au moins une requête. Lorsque le routeur actif reçoit un tel paquet actif, il lit cette requête dans le paquet actif et l'exécute immédiatement, avant de lancer le programme, voire avant même de télécharger le programme ou en parallèle au téléchargement.

Ceci permet avantageusement de mettre en oeuvre la requête sans devoir attendre le lancement du programme qui peut éventuellement être long à intervenir notamment s'il est téléchargé via réseau. La requête peut ainsi permettre des traitements anticipés avant le lancement du programme dans le but d'assurer par exemple le fonctionnement fiable du programme.

En particulier, la requête peut servir à la mise en place d'un filtre grâce auquel le routeur intercepte les paquets du flux à traiter et les place dans une queue de stockage temporaire avant même le lancement du programme. Après chargement et lancement par le routeur, le programme effectue les traitements prévus sur les paquets ainsi interceptés, puis les envoie au destinataire.

Nous allons illustré un exemple préféré en relation avec la **figure 1.**

Un premier terminal 2 envoie un paquet actif via réseau vers un deuxième terminal 3. Ce paquet actif contient un message destiné au terminal 3 pour lui demander d'envoyer au terminal 2 par exemple un flux de vidéo sur IP.

Ce paquet actif contient aussi une identification d'un programme de traitement disponible sur le réseau et servant à traiter les paquets du flux vidéo que va envoyer le terminal 3 au terminal 2, ce programme devant être téléchargé et exécuté par un routeur 1 intermédiaire entre les terminaux 2 et 3. Bien que la figure 1 ne représente qu'un seul routeur intermédiaire entre les terminaux 1 et 2, il est évidemment possible qu'il y ait une pluralité de routeurs actifs ou non entre ces deux terminaux.

A titre d'exemple, le traitement effectué par le programme comprend le transcodage des données vidéo du flux vidéo à un premier format vers un autre format par exemple pour adaptation au format d'affichage du terminal 2. Ladite identification de programme peut comprendre par exemple le nom du programme à télécharger et l'adresse réseau à laquelle il est disponible. En variante, le paquet peut contenir le programme lui-même, du moins lorsque sa taille permet de le placer dans le paquet.

Enfin, le paquet actif contient aussi au moins une requête destinée à être exécutée par le routeur actif 1 de manière anticipée par rapport à l'exécution du programme à télécharger. On désignera par la suite cette ou ces requêtes par « requête(s) à traitement anticipé ».

La **figure 2** détaille la structure du paquet actif. La partie 6 est l'entête IP qui comprend une partie 7 correspondant aux options IP. La partie 8 représente le corps du paquet (appelé « payload » en anglais). Il est préférable que la ou les requêtes à traitement anticipé, ainsi que l'identification du programme de traitement (ou le programme de traitement lui-même) soient placés dans la partie 7 correspondant aux options IP. L'utilisation des options IP est particulièrement bien adaptée car cette zone du paquet IP est destinée à transporter des informations sur le traitement du paquet à effectuer. Les routeurs existants sont généralement conçus pour être capable de traiter les informations contenues dans les options IP. Le message destiné au terminal 3 peut être placé classiquement dans la partie 8 du paquet actif.

Une requête à traitement anticipé peut prendre la forme d'information codée contenue à un endroit prédéterminé spécifique dans le paquet actif, les routeurs actifs étant programmés pour pouvoir interpréter ces informations codées pour mettre en oeuvre les requêtes correspondantes. En variante, une requête à traitement anticipé peut également être un programme ou code à exécuter (autre qu'un programme de traitement des paquets par les routeurs actifs). Dans ce cas aussi, la requête à traitement anticipé peut être reconnaissable en raison de l'emplacement prédéterminé spécifique dans le paquet actif.

Par ailleurs, l'identification du programme de traitement (ou le programme de traitement lui-même) peut aussi être placée à un endroit prédéterminé spécifique du paquet actif (autre que celui réservé aux requêtes à traitement anticipé). Ainsi, le routeur reconnaît facilement le programme de traitement ou son identification comme tel, et évite la confusion avec la ou les requêtes anticipées.

Il existe une autre manière particulièrement avantageuse permettant aux routeurs de reconnaître la présence d'une ou plusieurs requêtes à traitement anticipé, dans le paquet actif, ainsi que l'identification du programme de traitement (ou le programme de traitement lui-même). Elle est basée sur le repérage de la ou de chaque requête à traitement anticipé, ainsi que de l'identification du programme de traitement (ou le programme lui-même) par une étiquette respective qui prend une valeur différente selon la nature de l'élément repéré, c'est-à-dire selon qu'il s'agisse d'une requête à traitement anticipée ou de l'identification du programme de traitement (ou du programme lui-même).

En particulier, l'étiquette peut être immédiatement suivie par la requête ou l'identification du programme (ou le programme lui-même) qu'elle sert à repérer dans le paquet. Dans ce cas, l'étiquette peut en outre comprendre la longueur de l'élément qu'il repère (la requête, l'identification du programme ou le programme lui-même selon le cas). Ainsi, la ou les requêtes à traitement anticipé et l'identification du programme (ou le programme lui-même) accompagnées de leur étiquette respective peuvent être placées les unes après les autres dans le paquet. Par ailleurs, la première étiquette peut être toujours placée à un endroit prédéterminé dans le paquet. Ainsi, à réception du paquet actif, le routeur lit la première étiquette à cet endroit prédéterminé. A partir des informations fournies par la première étiquette, le routeur connaît à la fois la nature et la longueur de l'élément qu'elle repère, ce qui lui permet de lire et gérer ce premier élément de façon adéquate, mais aussi de déterminer la position de la prochaine étiquette. Le routeur peut de cette manière lire et gérer successivement tous les éléments repérés - requêtes à traitement anticipé et identification de programmes de traitement (ou programme de traitement) - par les étiquettes.

Le recours à des étiquettes est avantageuse en raison de sa souplesse dans la gestion des emplacements réservés aux requêtes à traitement anticipée et à l'identification du programme de traitement (ou au programme lui-même) dans le paquet actif. Cette solution est particulièrement adaptée dans le cas de paquets de type IP.

Bien entendu, d'autres manières d'identifier les requêtes à traitement anticipé et le programme de traitement à l'intérieur du paquet actif peuvent être employées.

Le paquet actif comporte également une indication quelconque appropriée permettant au routeur actif 1 de reconnaître que ce paquet est du type actif. Cette indication peut notamment être du type utilisé dans l'art antérieur. A titre d'exemple, une possibilité consiste à inclure un marqueur dans son entête. Plus particulièrement, on peut pour cela définir une option réservée du paquet IP. Selon un autre exemple, on utilise le champ « FLOW LABEL » du protocole IPv6 pour marquer le paquet comme actif. On peut notamment donner une valeur prédéterminée à un tel champ du paquet pour indiquer qu'il s'agit d'un paquet actif. Selon encore un autre exemple, un marqueur d'un label MPLS du paquet peut servir à indiquer que le paquet est actif. L'utilisation d'un marqueur inclus dans un label MPLS permet au routeur actif de déterminer plus rapidement si le paquet est actif.

Lorsqu'il reçoit le paquet actif, le routeur 1 l'identifie en tant que tel en raison de l'indication précitée présente dans le paquet. Le routeur vérifie alors la présence d'une ou plusieurs requêtes à traitement anticipé dans le paquet actif. Dans l'affirmative, il lit celle(s)-ci et les exécute. Par ailleurs, le routeur 1 lit le programme ou l'identification du programme à télécharger dans le paquet actif.

Ensuite, il envoie le paquet actif au terminal 3 car le routeur 1 n'a pas de traitement à réaliser sur le paquet actif. Il est préférable que le routeur 1 n'envoie le paquet actif au terminal 3 qu'après avoir exécuté les requêtes à traitement anticipé.

A titre d'exemple préféré, une requête à traitement anticipé peut comprendre la définition d'un filtre à mettre en place par le routeur, le filtre permettant au routeur d'identifier les paquets appartenant au flux à traiter par le programme. Le filtre peut notamment être effectué en fonction de paramètres contenus dans les paquets du flux à traiter tels que :
- l'adresse du destinataire du flux à traiter (le terminal 2 dans notre exemple) ; ou
- l'adresse de l'émetteur du flux à traiter (le terminal 3 dans notre exemple) ; ou
- un identifiant placé dans la partie des données (« payload ») des paquets du flux à traiter ; ou
- les ports de source ou de destination ; ou
- l'identification du protocole utilisé pour mettre en forme la zone de données des paquets du flux à traiter.

Le routeur 1 met donc en place le filtre avant de transmettre le paquet actif au terminal 3. Par ailleurs, le routeur 1 commence le téléchargement dudit programme à partir de son adresse réseau. En réponse au paquet actif, le terminal 3 envoie le flux de vidéo demandé vers le terminal 2, ce flux traversant le routeur 1.

Lorsque les paquets du flux vidéo arrivent au routeur 1, il les reconnaît grâce au filtre déjà en place. De ce fait, le routeur 1 place ces paquets dans une queue de stockage temporaire en attendant qu'ils soient traités par le programme. A la réception de ces paquets, il est possible que le routeur 1 n'ait pas encore lancé le programme. Il est même possible que le routeur 1 soit encore en train de télécharger le programme. Une fois le programme téléchargé et lancé, le routeur 1 traite - par application du programme - les paquets qu'il a précédemment stocké dans la queue, puis envoie les paquets traités vers le terminal 2. Ainsi, aucun des paquets du flux à traiter n'est transmis au terminal 2 sans avoir été effectivement traité par le routeur 1.

Dans une variante à l'exemple décrit précédemment en relation avec la figure 1, le terminal 2 envoie un paquet actif via réseau vers le terminal 3, ce paquet actif contenant une information indiquant au terminal 3 qu'il va lui envoyer par exemple un flux de vidéo sur IP. Le paquet actif contient aussi une identification d'un programme disponible sur le réseau et servant à traiter les paquets du flux vidéo que va envoyer le terminal 2 au terminal 3, ce programme devant être téléchargé et exécuté par un routeur 1 intermédiaire entre les terminaux 2 et 3. Enfin, le paquet actif contient aussi au moins une requête à traitement anticipé comme précédemment.

Comme précédemment, lorsqu'il reçoit le paquet actif, le routeur 1 l'identifie en tant que tel, vérifie la présence de requêtes à traitement anticipé dans le paquet actif et les exécute le cas échéant. Par ailleurs, le routeur 1 lit le programme ou l'identification du programme à télécharger dans le paquet actif. Ensuite, il envoie le paquet actif au terminal 3 après avoir exécuté les requêtes à traitement anticipé. Comme précédemment, une requête de traitement anticipé peut comprendre la définition d'un filtre d'identification des paquets du flux à traiter. En réponse au paquet actif, le terminal 3 envoie un message via réseau au terminal 2 pour l'informer qu'il est prêt à recevoir le flux de vidéo. A réception de ce message, le terminal 2 envoie vers le terminal 3 le flux de vidéo.

Là-encore, il peut arriver que les premiers paquets du flux vidéo soient reçus par le routeur 1 sans que celui-ci ait lancé le programme ou qu'il soit encore en train de télécharger le programme. Mais comme dans l'exemple précédent, lorsque les paquets du flux vidéo arrivent au routeur 1, celui-ci les reconnaît grâce au filtre déjà en place. De ce fait, le routeur 1 place ces paquets dans une queue de stockage temporaire en attendant qu'ils soient traité par le programme. Ainsi, aucun des paquets du flux à traiter n'est transmis au terminal 3 sans avoir été effectivement traité par le routeur 1.

Bien que les requêtes à traitement anticipé dans les exemples précités concernent la mise en place d'un filtre de reconnaissance des paquets à intercepter pour traitement, elles peuvent aussi concernés d'autres traitements.

A titre d'exemple, une requête à traitement anticipé peut porter sur le dimensionnement par le routeur d'une queue de stockage temporaire de paquets. En d'autres termes, une telle requête définit la taille de cette queue de stockage que mettra en place le routeur actif. Une requête de ce type peut notamment compléter une requête à traitement anticipé de mise en place d'un filtre du type précédemment décrit dans le but d'assurer que la queue ait une taille suffisante pour stocker les paquets du flux à traiter pendant le temps de téléchargement et de lancement du programme.

Plus généralement, les requêtes à traitement anticipé peuvent concerner toute sorte de paramétrage de la mise en place du programme de traitement. Dans un premier exemple, la requête définit le nombre d'instances du programme de traitement à lancer en parallèle dans le but de traiter en parallèle des paquets du flux à traiter. Dans un deuxième exemple, la requête définit la taille mémoire à allouer au programme de traitement. Dans un troisième exemple, la requête définit la politique à appliquer par le routeur en cas de dépassement de capacité de la queue de stockage avant que le programme ait pu démarrer.

Ces exemples sont évidemment non exhaustifs et peuvent être combinés ou non entre eux.

Les requêtes peuvent encore porter sur la manière dont le paquet actif lui-même est sensé être géré par le routeur actif. A titre d'exemple, une requête à traitement anticipé comprend une indication servant à indiquer au routeur 1 s'il peut :
- envoyer le paquet actif qui la contient à son destinataire avant l'exécution des autres requêtes à traitement anticipé contenues dans ce paquet actif ; ou
- au contraire, s'il doit assurer l'exécution de ces autres requêtes avant d'envoyer le paquet actif à son destinataire ; ou
- encore s'il doit assurer le chargement/téléchargement du programme de traitement et son lancement avant d'envoyer le paquet actif à son destinataire.

A réception d'un paquet actif, le routeur lit cette indication dans le paquet actif et applique l'ordre correspondant. En variante, une telle indication peut faire partie de l'étiquette servant à repérer la requête à traitement anticipé dans le paquet lorsque la technique des étiquettes est utilisée comme décrit plus haut.

Une telle indication permet une gestion souple des paquets actifs par les routeurs actifs en fonction des impératifs des programmes de traitement. Elle permet notamment de réduire l'encombrement du réseau ou le ralentissement des échanges de données en évitant de retenir systématiquement le paquet actif jusqu'au lancement des requêtes à traitement anticipé, voire jusqu'au lancement complet du programme. Une telle indication peut avantageusement consister en un ou plusieurs booléens à un emplacement prédéterminé dans les options 7 du paquet actif.

Par ailleurs, les requêtes à traitement anticipé peuvent concerner un traitement à effectuer par le routeur actif sur le paquet actif lui-même qui contient cette requête. Il peut par exemple s'agir d'un traitement à effectuer sur la zone de données 8 (« payload ») du paquet actif. En particulier, il peut s'agir d'un codage ou d'un chiffrement des données du paquet actif.

Bien entendu, la présente invention n'est pas limitée aux exemples et modes de réalisation décrits et représentés, mais elle est susceptible de nombreuses variantes accessibles à l'homme de l'art. En particulier, l'invention est applicable plus généralement à tout réseau de communication par paquets comprenant des noeuds actifs autres que ceux employant le protocole IP.

## Revendications

1. Procédé de fonctionnement d'un noeud actif (1) apte à traiter des paquets de données en exécutant un programme contenu ou identifié dans un paquet actif, ce programme étant destiné à commander des fonctions de traitement de paquets de données ; **caractérisé en ce qu'**il comprend les étapes de :
a) réception d'un paquet actif ;
b) exécution d'une requête contenue dans le paquet actif, et destinée à configurer des fonctions de traitement de paquets ;
c) exécution d'un programme contenu ou identifié dans le paquet actif, et destiné à commander des fonctions de traitement paquets de données ; ce programme étant exécuté après l'exécution de cette requête.

2. Procédé selon la revendication 1, **caractérisé en ce que** l'étape b) comprend la mise en place d'un filtre de paquets.

3. Procédé selon la revendication 2, **caractérisé en ce que** l'étape b) est suivie d'une étape de réception et stockage de paquets correspondant au filtre au moins aussi longtemps que l'étape c) n'est pas réalisée.

4. Procédé selon la revendication 1, **caractérisé en ce que** ledit paquet actif est à envoyer vers une adresse réseau, le procédé comprenant après l'étape b) une étape d'envoi du paquet actif vers ladite adresse.

5. Procédé selon la revendication 1, **caractérisé en ce que** ledit paquet actif est à envoyer vers une adresse réseau, le procédé comprenant une étape d'envoi du paquet actif vers ladite adresse soit après l'étape b), soit après l'étape c), en fonction de la requête contenue dans le paquet actif.

6. Procédé selon la revendication 1, **caractérisé en ce que** l'étape b) comprend une opération de dimensionnement d'une queue de stockage de paquets.

7. Procédé selon la revendication 1, **caractérisé en ce que** l'étape b) comprend une opération de lecture, dans le paquet actif, de paramètres de lancement du programme.

8. Procédé selon la revendication 1, **caractérisé en ce que** l'étape c) comprend une opération de téléchargement d'un programme identifié dans le paquet actif.

9. Noeud actif (1 ) apte à traiter des paquets de données en exécutant un programme contenu ou identifié dans un paquet actif, ce programme étant destiné à commander des fonctions de traitement de paquets de données ; **caractérisé en ce qu'**il comprend des moyens pour :
a) la réception d'un paquet actif ;
b) l'exécution d'une requête contenue dans le paquet actif, et destinée à configurer des fonctions de traitement de paquets ;
c) et l'exécution d'un programme contenu ou identifié dans le paquet actif, et destiné à commander des fonctions de traitement paquets de données, ce programme étant exécuté après l'exécution de cette requête.

10. Paquet de données, **caractérisé en ce qu'**il comprend :
- une requête destinée à être exécutée dans un noeud actif pour configurer des fonctions de traitement de paquets, avant l'exécution d'un programme commandant des fonctions de traitement paquets ;
- et un programme ou une identification d'un programme, ce programme étant destiné à être exécutée dans un noeud actif pour commander des fonctions de traitement paquets, après l'exécution de la requête.

11. Paquet de données selon la revendication 11, de type IP, dans lequel ledit programme ou ladite identification de programme, ainsi que ladite requête, sont placés dans les options du paquet IP.
